# EUROPEAN PATENT APPLICATION

(11) **EP 0 839 442 A1**
(43) Date of publication of application: **06.05.1998**
(21) Application number: 97308148.2
(22) Date of filing: 14.10.1997
(51) Int. Cl.: A01B 15/14, A01B 3/46

(54) **Semi-mounted reversible plough**

(30) Priority: 18.10.1996 GB 9621722
(71) Applicant: KVERNELAND KLEPP AS, N-4344 Kvernaland (NO)
(72) Inventor: Stangeland, Kjell-Egil, 4060 Kleppe (NO)
(74) Representative: Orr, William McLean

(57) **Abstract**

A semi-mounted reversible plough (10) which is coupled with a lift mechanism (12) at the rear of a propelling vehicle (11) via a headstock (18) and a forward pivot coupling (19) connected to the headstock (18), and in which the plough comprises; a plough frame connected to the pivot coupling (19) and including a towing beam (13) and a plough beam (14) having a number of pairs of reversible plough bodies (15) along its length, in which a foremost pair of plough bodies (15a) is located on one side of the central axis (XX) of the propelling vehicle (11) and the other pairs of plough bodies (15) are arranged on the opposite side of the axis (XX) during ploughing; mounting brackets (16) carrying the pairs of plough bodies (15) and each being pivotally mounted on the plough beam (14) via a respective pivot (27); an adjustor rod (17) extending alongside the plough beam (14) and connected to the bracket (16) via respective pivots (28) and adjustable lengthwise in order to carry out joint angular adjustment of the brackets (16) so as to vary the furrow width (W); a power operated lift arm (29) pivotally mounted on a forward end of the towing beam (13) and connected to the forward end of the plough beam (14) so that it can be operated to rotate the plough beam (14) about the towing beam (13) in order to adjust the plough bodies (15) between left-side ploughing and right-side ploughing; a ground wheel (29) supporting the rear end of the plough frame (13,14); a rear frame connection (23) which interconnects the towing beam (13) and the plough beam (14) and a forward frame connection (30,31,32) which interconnects the forward end of the plough beam (14) and the towing beam (13), in which the forward frame connection and the rear frame connection form a four sided plough frame together with the towing beam (13) and the plough beam (14);
in which the rear frame connection (23) is pivotally mounted on the plough beam (14) via pivot (25) and is pivotally connected to the adjustor rod (17) via pivot (26) so that upon longitudinal adjustment of the towing beam (13) to vary its length, the rear frame connection (23) pivots about pivot (25) and causes lengthwise adjustment of rod (17) to adjust a bracket 16 for altering the furrow width (W);
characterised in that the forward frame connection (30,31,32) includes a mounting bracket (31,I) to which the forward end of the plough beam (14) is pivoted via pivot (27a); the mounting bracket (31,I) is slidable relative to the lift arm (29) under the operation of a linear actuator (32) in order to adjust the position of the foremost pair of plough bodies (15a) laterally relative to the centre axis (XX) of the propelling vehicle for the purposes of adjustment to a different vehicle wheel base; and the mounting bracket (31,I) remains fixed in position along the length of the lift arm (29) during furrow width adjustment.

## Description

This invention relates to a semi-mounted reversible plough which is intended to be coupled at its forward end to a lifting mechanism at the rear of a tractor or other propelling vehicle.

A semi-mounted reversible plough usually comprises a headstock to mount the forward end of the plough on the lifting mechanism, a towing beam which is pivotally coupled at its forward end via a towing point to the headstock and is supported at or near its rear end via a ground wheel, a plough beam carrying reversible plough bodies arranged in pairs along its length, frame members connecting the plough beam to the towing beam, means permitting pivoting adjustment of the plough beam about the general axis of the towing beam in order to reverse the plough bodies between left-side ploughing and right-side ploughing, and a power operated mechanism acting between the plough beam and the towing beam in order to reverse the plough bodies.

Pairs of reversible plough bodies are pivotally mounted on the plough beam by suitable mounting brackets arranged along the length of the plough beam, and pivotal adjustment of the brackets relative to the plough beam allows adjustment of the width of the furrows formed by the plough bodies.

Earlier designs had simple bolt-types of adjustment for each bracket, and therefore adjustment of the width of the furrows has been time consuming in that each bracket has to be adjusted individually, and with care being required to ensure that each bracket is adjusted by the same amount.

In order to speed-up the adjustment, and to ensure the same adjustment of each pair of plough bodies, it is known to provide an adjuster rod which extends alongside the plough beam, and which is pivotally connected along its length to the adjustment brackets. Lengthwise adjustment of the rod, relative to the plough beam, results in joint actuation of the brackets which are all pivoted through the same angle in order to adjust the width of the furrows.

After this angular adjustment of the brackets of the plough bodies (which will usually be carried out with the plough stationary), the axes of the plough bodies will be inclined to a small extent to the previous ploughing direction. However, upon subsequent forward movement of the tractor, the plough frame (towing beam and plough beam) adjusts itself automatically about the forward towing pivot, so that the plough bodies become aligned again with the ploughing direction, but with a different adjustment of furrow width which is formed.

This adjustment may be desirable in order that:
(a) to suit different ground conditions and
(b) to adapt the plough to a tractor of different power output (a higher power output is required to plough with a wide furrow width than with a narrow plough width).

Another important adjustment which may be required is to make sure that the foremost pair of plough bodies on the plough beam (which is usually located to one side of the tractor axis whereas all (or most) of the other pairs of plough bodies are located on the other side of the tractor axis) is correctly adjusted laterally, by a required spacing from the tractor axis. This adjustment is usually only required to be carried out once, when changing from one design of tractor to another having a different wheel base; or when changing the wheel base of a particular tractor.

Another aspect of the design of a semi-mounted reversible plough which has to be taken into account, concerns the way in which the rear ground wheel is connected to the frame of the plough. This ground wheel serves to provide vertical support for the rear part of the semi-mounted plough, (with the forward end of the plough frame being supported via the headstock), and this ground wheel assists in maintaining a required ploughing depth, and also controls the direction in which the plough frame moves over the ground. However, during plough body reversal, when the plough beam is adjusted to orbit through approximately 180° about the general axis of the towing beam, the ground wheel must remain in contact with the ground and allow this adjustment movement while the tractor is moving forwardly, (and turning around in the usual headland). The wheel also allows the entire plough frame to pivot about the forward towing point so that the towing beam then extends obliquely in an opposite direction with respect to the ploughing direction, and with the plough beam extending alongside it, and the opposite plough body in each pair now in contact with the ground.

The way in which the ground wheel is connected to the plough frame has to take into account both the plough body reversal which takes place after each passage from one end of a field to another and also must take into account the possibility that the brackets on which the pairs of plough bodies are mounted may require to be adjusted pivotally, to vary the furrow width formed by the plough body. Finally, the possibility of lateral adjustment of the foremost pair of plough bodies also must be considered, when designing the plough frame construction and the connection of the components to the plough frame.

The present invention addresses these different requirements, and provides a unique combination of features in a semi-mounted reversible plough, which is an inventive combination giving technical advantage over existing designs.

A semi-mounted reversible plough according to the invention is defined in Claim 1.

A semi-mounted reversible plough according to the invention can therefore readily be adjusted (1) in order to vary the inclination of the plough bodies to the plough beam (to vary the furrow width, by lengthwise adjustment of the towing beam) but without requiring slidable adjustment movement of the mounting bracket at the forward end of the plough frame and which remains fixed during furrow width adjustment and (2) to adjust the lateral position of the foremost pair of plough bodies when a different design of propelling vehicle is used e.g. with a different width spacing between the rear wheels of a tractor.

Preferably, the mounting bracket is slidably mounted on the lift arm, and consequential lateral movement of the plough beam is permitted by pivoting about the pivot between the plough beam and the rear frame connection.

The rear frame connection preferably comprises an arm which is pivotally connected to a wheel cradle structure for movement about a pivot axis during plough body reversal.

The wheel cradle structure may be connected to a rear end of the towing beam via a universal joint coupling.

The four sided frame structure (formed by the forward frame connection, the towing beam, the rear frame connection and the plough beam), is adjustable in shape, when lengthwise adjustment is carried out of the front frame connection, or the towing beam, but after adjustment it maintains a generally similar fixed shape during ploughing and also after adjustment of the plough bodies from left side ploughing to right side ploughing, and vice-versa.

The geometry of the plough frame structure, and particularly the relative spacing apart of the forward pivot coupling and the forward pivot connection (of the plough beam to the mounting bracket), is designed in such a way as to obtain accurate adjustment of the foremost pair of plough bodies (a) to laterally position the plough bodies relative to the tractor axis X-X and (b) to obtain the same furrow width W after joint adjustment of all of the plough bodies.

A preferred embodiment of semi-mounted reversible plough according to the invention will now be described in detail, by way of example only, with reference to the accompanying drawings, in which:
Figure 1 is a plan view of a semi-mounted plough, mounted on the rear lifting mechanism of a tractor;
Figure 2 is also a plan view, to an enlarged scale and illustrating how adjustment of the components of the plough can take place;
Figure 3 is a detailed plan view, to a further enlarged scale, showing the mounting of a rear ground wheel at the rear end of the plough frame; and a rear frame interconnection between a towing beam and a plough beam of the frame;
Figure 4 is a side view of the plough, in an intermediate position of adjustment of the plough beam, between left side plough and right side ploughing;
Figure 5 is a detailed and enlarged side view of the ground wheel assembly and the rear frame connection; and
Figure 6 is a perspective illustration of the forward end of the plough frame in more detail.

Referring now to the drawings, a preferred embodiment of semi-mounted reversible plough is designated generally by reference 10, and is a semi-mounted plough, in the sense that the headstock 18 at the forward end of the plough frame is mounted on a rear lifting mechanism 12 of a tractor or other propelling vehicle 11, having a central axis x-x. The rear of the plough frame is supported by a ground wheel 21.

The headstock 18 has a usual pivot coupling 19, forming a vertical pivot axis and allowing lateral pivoting movement of the plough frame when the plough is undergoing plough body reversal, so that the plough frame can align itself properly behind the tractor for left-side ploughing or right side ploughing as the case may be.

The main components of the plough frame comprise a towing beam 13 and a plough beam 14, and a number of pairs of reversible plough bodies 15 are arranged along the length of the plough beam 14. A foremost pair of plough bodies 15a is located on one side of the central axis X-X of the tractor 11, and the remainder of the pairs of plough bodies 15 are arranged on the opposite side of this axis during ploughing.

Mounting brackets 16 carry the pairs of plough bodies 15, and each being pivotally mounted on the plough beam 14 via respective pivots 27. The mounting bracket in respect of the foremost pair of plough bodies 15a is designated by reference 16a, and this bracket is pivotally mounted on the plough beam 14 via vertical pivot 27a. This pivot 27a also serves to pivotally mount the forward end of the plough beam 14 on a mounting bracket 31, the construction and operation of which is described in more detail below.

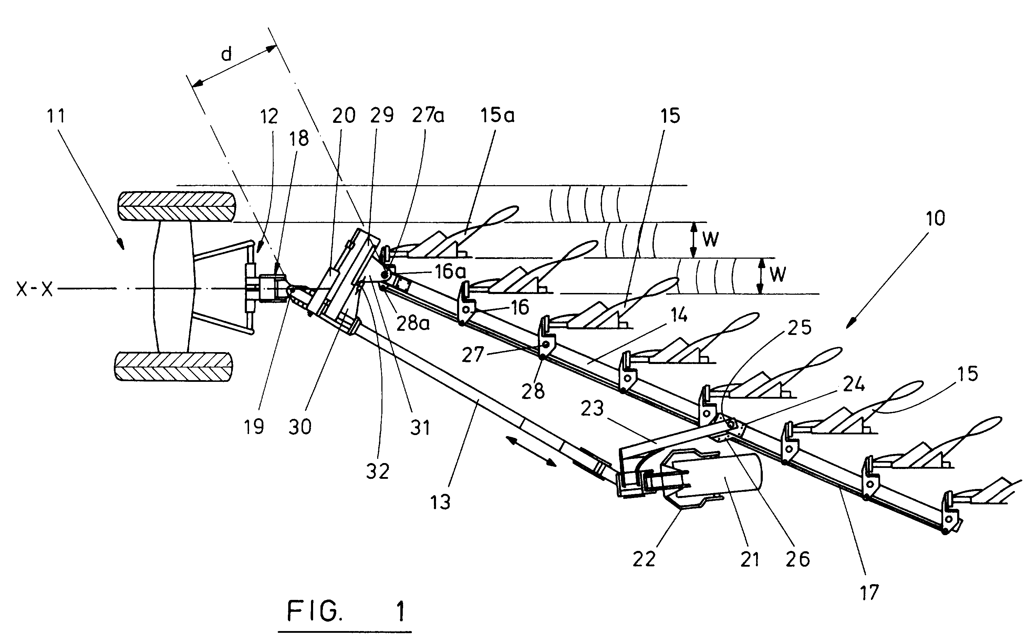

An adjuster rod 17 extends alongside the plough beam 14 and is connected to the brackets 16 via respective pivots 28, and also to the forward bracket 16a via forward pivot 28a, whereby upon lengthwise adjustment of the rod 17 relative to the plough beam 14, joint angular adjustment of the brackets takes place so as to vary the furrow width W (See Figure 1), when required.

A power operated lift arm 29 is pivotally mounted at one end on an axle forming a forward end of the towing beam 13, and is connected at its other end to the forward end of the plough beam 14, the lift arm being operated by a reversing cylinder 20 to rotate the plough beam 14 about the towing beam 13 in order to adjust the plough bodies between left side ploughing and right side ploughing.

As mentioned above, rear ground wheel 21 is provided to support the rear end of the plough frame, and thereby to control ploughing depth, and also to assist the plough frame to align itself behind the tractor, during manoeuvring of the tractor and particularly during plough body reversal.

A rear frame connection 23 interconnects the towing beam 13 and the plough beam 14, and is moveable with the plough beam 14 during plough body reversal. The frame connection 23 takes the form of an arm which is pivotally mounted on one end on the plough beam 14 via a vertical pivot 25 carried by a mounting bracket 24, whereas its other end is cranked, as seen in plan view, and is coupled with part of the wheel support structure 22.

At the forward end of the plough frame, there is provided a forward frame connection which interconnects the forward end of the plough beam 14 and the towing beam 13, and which also is moveable with the plough beam 14 during plough body reversal under the action of the lift arm 29. The forward frame connection comprises the lift arm 29, the mounting bracket 31, (which is slidably mounted for movement along the length of the lift arm 29 on guide rails), a reaction bracket 30 connected to or integrated with lift arm 29, and an actuator 32 e.g. a pressure cylinder, which is operative to move the bracket 31 along the lift arm 29. (The forward frame connection components (29, 30, 31, 32) are jointly movable with the lift arm 29 during plough body reversal). This forward frame connection therefore is adjustable in length, when it is required to alter the position of the forward end of the plough beam 14 and particularly of the foremost pair of plough bodies 15a, laterally relative to the centre line X-X of the tractor 11, to adapt the plough frame to a different design of tractor i.e. one with a different width spacing between the rear wheels. This adjustment is usually only carried out once, to suit a different wheel base. Thereafter, all of the plough bodies are jointly adjustable by equal amounts to obtain the same furrow width.

Therefore, the position of the bracket 31 is adjusted on the guide rails of the lift arm 29 once only, to suit a different tractor wheel base, and to provide a required lateral spacing of the foremost pair of plough bodies 15a from the tractor axis X-X. Thereafter, (with the forward pivot point 27a independently adjusted to this new position), joint adjustment of all of the plough bodies by lengthwise adjustment of rod 17 results automatically in correct adjustment of the foremost pair of plough bodies as well. This is achieved by careful selection of relative dimensions in the overall geometry of the frame structure. In particular, it is understood that this can be achieved by selecting suitable distance between the forward pivot 19 and the individual bracket pivots 27. Assuming the spacing between forward pivot 19 and the foremost pivot 27a to be d (see Figure 1), the spacing between pivot 19 and the second pivot 27 will be 2d; between pivot 19 and the third pivot 27 will be 3d; and so on along the length of the beam 14.

The forward frame connection (29,30,31,32), the towing beam 13, the rear frame connection 23 and the portion of the plough beam 14 running between forward pivot 27a and rear pivot 25 form a four sided plough frame structure which normally maintains a fixed shape, during ploughing operations, and also after plough body reversal from left side ploughing to right side ploughing and vice versa. However, the relative inclinations of the four frame components to each other can be adjusted, when required, by lengthwise adjustment of the towing beam 13 and/or of lengthwise adjustment of the forward frame connection.

When it is required to vary the furrow width W, this is achieved by joint pivotal actuation of the plough bodies with respect to the ploughing beam 14, and which is obtained by lengthwise adjustment of the towing beam 13. Adjustment of the length of towing beam 13 applies a turning force to the rear frame arm 23, which pivots about the axis of pivot 25, and via a pivot connection 26 to the rod 17 (pivot 26 is carried by a bracket attached to this end of the frame arm 23), lengthwise adjustment of the rod 17 takes place, which applies joint pivotal actuation of all of the plough body mounting brackets. The plough bodies are therefore jointly actuated to move through the same angle, as a direct consequence of the lengthwise adjustment of the towing beam 13.

As mentioned above, lengthwise adjustment of the forward frame connection can be obtained (by operation of actuator 32, and which moves the forward end of the plough beam 14 laterally.) When it is necessary to make sure that the foremost plough bodies 15a can plough a furrow which is of the same width as the other furrows formed by the other plough bodies. Also, this adjustment allows a regular array of furrows (despite plough body reversal) and for one of the rear wheels of the tractor to run in a furrow formed by a previous ploughing passage across a field.

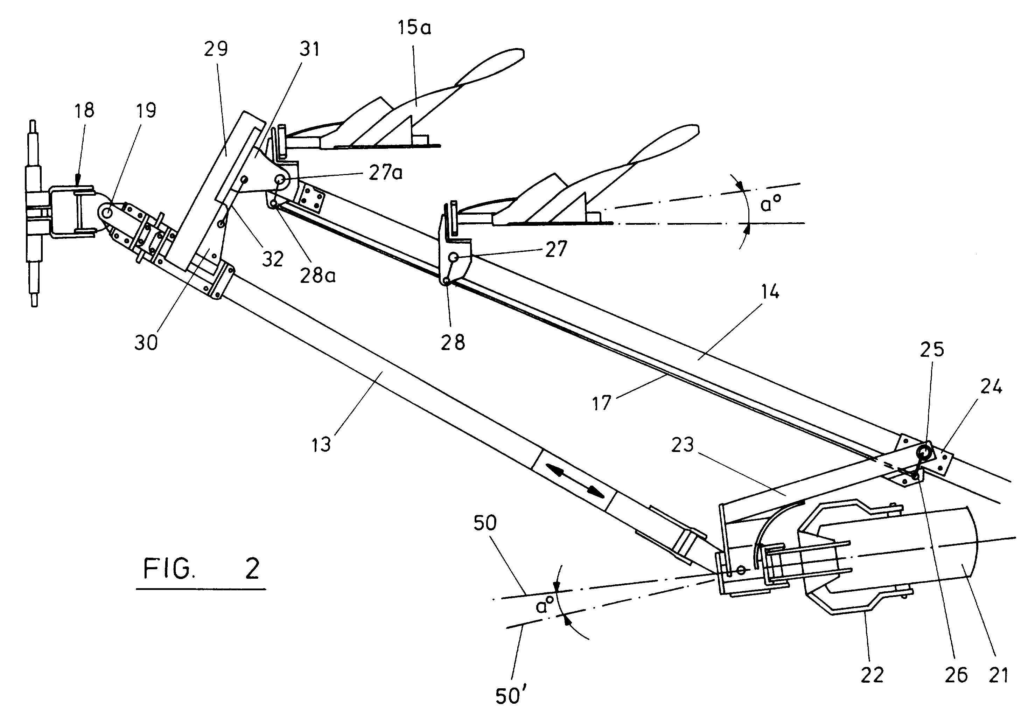

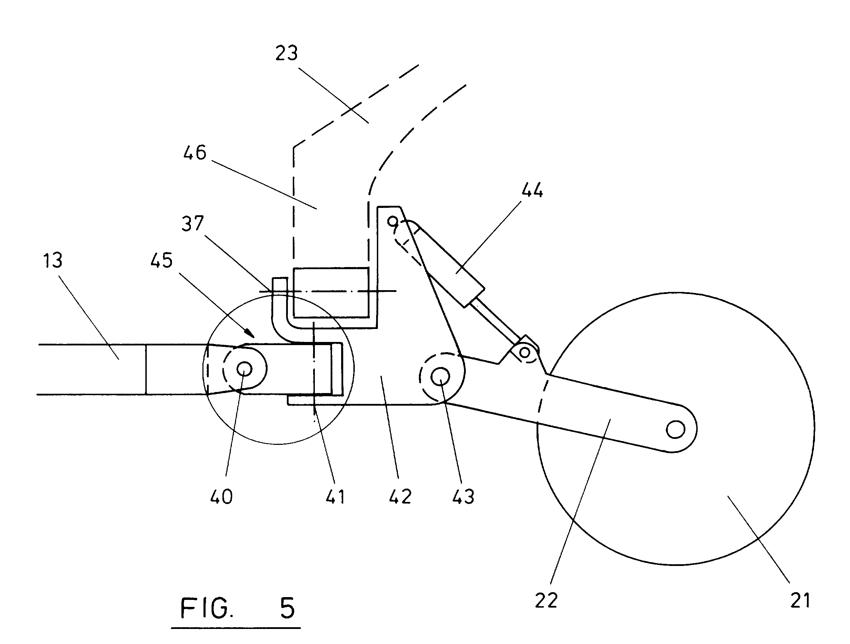

Figure 1 shows the formation of furrows of width W, during right-side ploughing, and Figure 2 shows schematically the adjustments which take place when the length of the towing beam 13 is increased. The axis 50 of wheel 21 moves through a small angle a, to take-up a new position 50', upon extension of towing beam 13, and this causes the connecting arm 23 to pivot in an anti-clockwise direction about pivot 25, thereby displacing the rod 17 linearly to the right, as seen in Figure 2, which causes anti-clockwise pivoting of the plough body brackets. It should be noted also that axis 50 coincides with the axis of a pivot axle 37 (which pivotally mounts cranked end 46 of rear frame connector arm 23 as described below with reference to Figure 5). The plough bodies therefore also move their axes through the same angle a, so that the new axis of ground wheel 21 and of the plough bodies remain parallel.

Forward movement of the tractor and plough then causes the plough frame to adjust itself laterally about the forward pivot point 19, until these axes again extend in the direction of travel, and with a new adjusted furrow width consequential upon the adjustment of the plough bodies. However, once the four sided plough frame has been adjusted, it maintains this set shape, during further ploughing, and also after each plough body reversal.

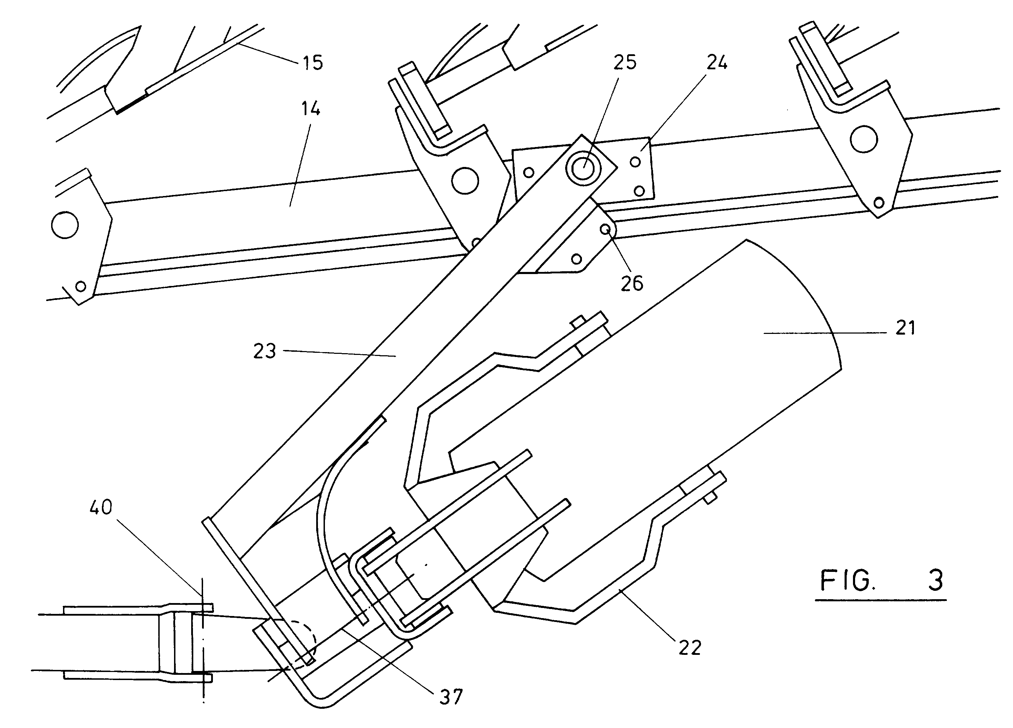

The construction and operation of the rear ground wheel 21 is shown in more detail in Figures 3, 4 and 5. The ground wheel 21 controls the working depth of the plough bodies, but also supports, and guides the plough frame during plough body reversal. Support cradle 22 controls the position taken by the wheel 21, and structure 22 is pivotally mounted on a support 42, via a generally horizontal pivot 43, and allows the height of the rear part of the plough frame to be adjusted, by operation of an adjuster cylinder 44 (see Figure 5). The structure 42 has a universal joint type of coupling, ringed and shown by reference 45 in Figure 5, and comprising a horizontal pivot 40 and a vertical pivot 41. A pivot 37 is carried by support 42, and generally extends substantially horizontally, when the plough has been adjusted to either ploughing position. A cranked end 46 of connector arm 23 is mounted on pivot 37, and during plough body reversal, when the ploughing beam 14 is caused to rotate about the towing beam 13, the connector arm 23 follows this movement, and also pivots about pivot 37. During this rotation of the connector arm 23, via its connection with the support 42, forced steering action is applied to the cradle 22 of the wheel 21, so as to alter the axis of the wheel 21 to a new direction, suitable for opposite side ploughing i.e. to an attitude suitable for left-side ploughing, compared with the position shown for right-side ploughing in Figures 1 and 2.

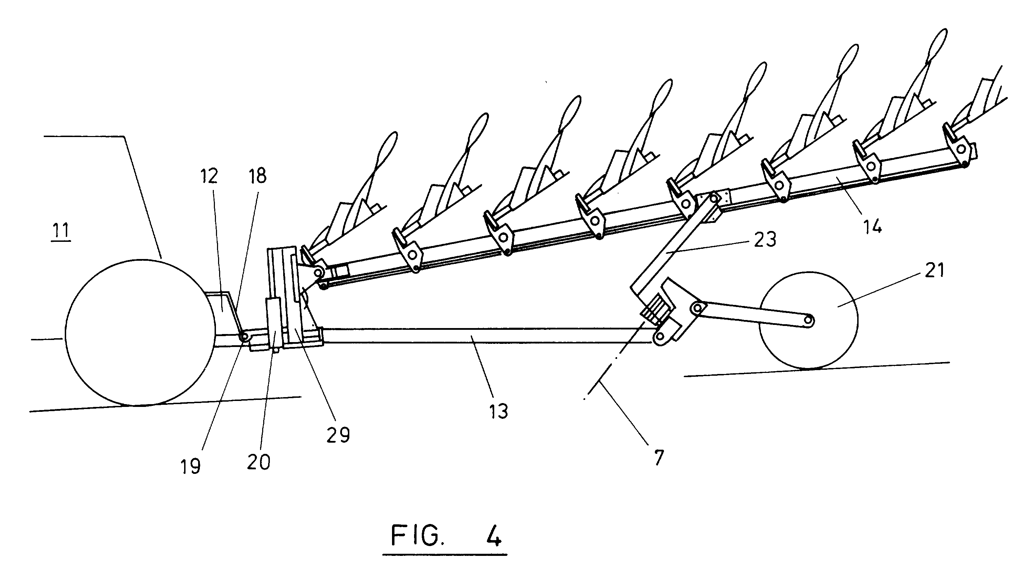

During rotation of the connector arm 23, it constrains the pivot 37 to move from the horizontal position of Figure 5, to a non-horizontal position e.g. the inclined position shown in Figure 4 corresponding to a mid and transport position of the plough beam 14 and its plough bodies, and then subsequently reverting back to horizontal position when the opposite ploughing position is reached.

Reverting to the schematic illustration of the adjustments shown in Figure 2, parallelogram type linkages are provided, to adjust the plough body brackets pivotally with respect to their mountings on the plough beam 14, but once a new position of adjustment has been reached, this is maintained, and effectively locked such that the shape taken-up by the four sides of the plough frame remains fixed, during ploughing operations, and during adjustment from one ploughing position to the other.

The lengthwise adjustment of the forward frame connection, (formed by brackets 30 and 31 and linear actuator 32), causes a small amount of lateral movement of the forward end of the plough beam 14, and which is permitted by pivoting through a very small angle about the rear pivot 25.

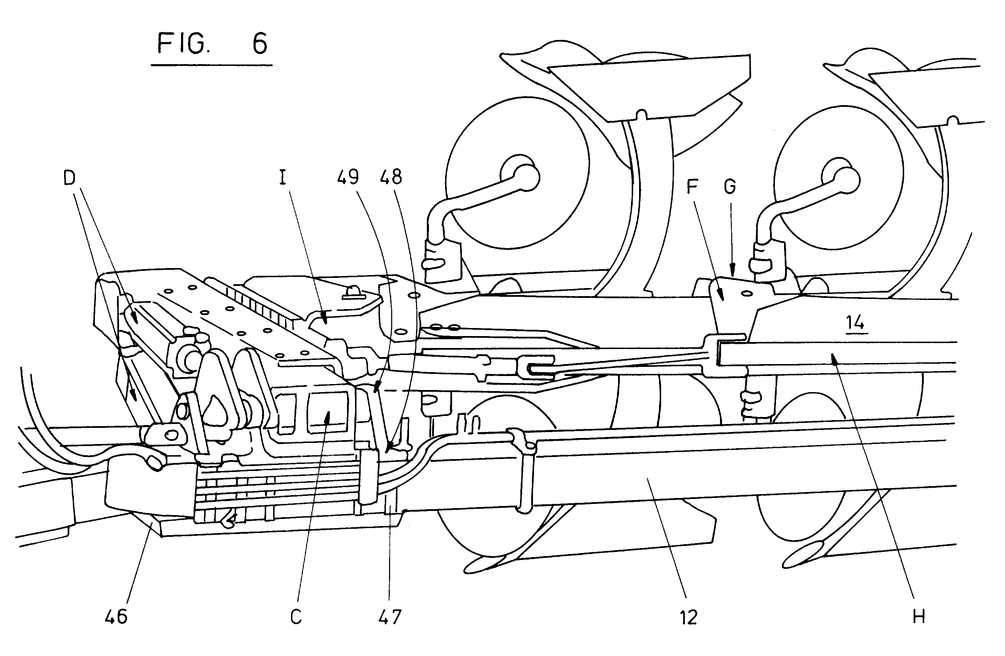

The forward end of the plough frame is shown in more detail in the perspective illustration of Figure 6. This shows in more detail the means by which the plough beam 14 can be pivoted, under the action of the lift arm, about the towing beam 13. It also shows in more detail the means by which linear adjustment of the forward pivot 27a can take place, as well as the means by which the plough bodies can be adjusted under the action of the common actuator rod.

In Figure 6, a forward pivot axle is shown by reference C, and turn-over cylinders D are operative to pivot the lift arm about the pivot axle C, during plough body reversal. Common actuating rod H acts jointly on the mounting brackets, one of which is shown by reference G, with the rod H acting via a pivotal connection to leg F of the bracket. Reference I shows the slide bracket (corresponding to mounting bracket 31), which can be moved by an actuator along the lift arm for lateral adjustment of the foremost pair of plough bodies 15a.

Figure 6 also shows in more detail the mounting of the reaction bracket 30 and the sliding bracket 31 on the lift arm 29 (first described with reference to Figures 1 and 2). At the inboard end of the lift arm i.e. at the forward end of the towing beam 13, there is shown a lower bracket plate 46, clamping bolts 47 and upper bracket plate 48 on which brackets 49 are mounted.

It is important to distinguish between lateral adjustment of the foremost pair of plough bodies 15a (to suit a different tractor wheel base and which is a one-off adjustment) with the adjustment of the furrow width W which the operator may require to suit different field conditions. Therefore, the slide bracket (31,I) remains fixed on its guide rails on the lift arm after adjustment by operation of linear actuator 32, and in particular does not move during subsequent adjustment of the furrow width W caused by length adjustment of towing beam 13.

There is therefore a mechanically simple mechanism at the forward end of the plough frame (29, 30, 31, 32, 27a, 28a), and in which joint furrow width (W) adjustment takes place without requirement for the slide bracket (31,I) to move along the lift arm 29 to permit such adjustment. Thus, by virtue of the particular geometry of the set-up (spacing of first bracket pivot 27a from forward pivot 19 equals 1d, spacing of second bracket pivot from pivot 19 equals 2d, and so on along the length of the plough beam 14), it is possible to achieve joint adjustment of the plough bodies by approximately equal amounts without movement of the slide bracket (31,I).

## Claims

1. A semi-mounted reversible plough (10) which is adapted to be coupled with a lift mechanism (12) at the rear of a propelling vehicle (11), and which comprises:
a headstock (18);
a forward pivot coupling (19) connected to the headstock (18);
a plough frame connected to the pivot coupling (19) and including a towing beam (13) and a plough beam (14);
a number of pairs of reversible plough bodies (15) arranged along the length of the plough beam (14), in which a foremost pair of plough bodies (15a) is located on one side of the central axis X-X of the propelling vehicle (11) and at least some of the other pairs of plough bodies (15) are arranged on the opposite side of said axis X-X during ploughing;
mounting brackets (16) carrying the pairs of plough bodies (15) and each being pivotally mounted on the plough beam (15) via a respective pivot (27);
an adjuster rod (17) extending alongside the plough beam (14) and connected to said brackets (16) via respective pivots (28) whereby, upon lengthwise adjustment of the rod (17) relative to the plough beam (14), joint angular adjustment of the brackets (16) takes place so as to vary the furrow width w;
a power-operated lift arm (29) pivotally mounted at one end on a forward end of the towing beam (13) and connected at its other end to the forward end of the plough beam (14), said lift arm (29) being operative to rotate the plough beam (14) about the towing beam (13) in order to adjust the plough bodies (15) between left side ploughing and right-side ploughing;
a ground wheel (21) arranged to support the rear end of the plough frame (13,14);
a rear frame connection (23) which interconnects the towing beam (13) and the plough beam (14) and which is moveable with the plough beam (14) during plough body reversal; and
a forward frame connection (30,31,32) which interconnects the forward end of the plough beam (14) and the towing beam (13), and which also is moveable with the plough beam (14) during plough body reversal; in which said forward frame connection (30,31,32), said rear frame connection (23), said towing beam (13) and said plough beam (14) form a four sided plough frame;
in which:
i. the rear frame connection (23) is pivotally mounted on the plough beam (14) via pivot (25) and is pivotally connected to the adjuster rod (17) via pivot (26); and
ii. the towing beam (13) is longitudinally adjustable to vary its length and thereby (a) to pivot the rear frame connection (23) about pivot (25) and (b) to cause lengthwise adjustment of rod (17) so as to adjust the brackets (16) for altering the furrow width W;
characterised in that:
a) the forward frame connection (30,31,32) includes a mounting bracket (31,I) to which the forward end of the plough beam (14) is pivoted via pivot (27a);
b) the mounting bracket (31,I) is slidable relative to the lift arm (29) under the operation of a linear actuator 32 in order to adjust the position of the foremost pair of plough bodies (15a) laterally relative to the centre axis X-X of the propelling vehicle for the purposes of adjustment to a different vehicle wheel base; and
c) the mounting bracket (31,I) remains fixed in position along the length of the lift arm 29 during furrow width adjustment.

2. A plough according to Claim 1, in which the mounting bracket (31) is slidably mounted on the lint arm (29), movement of the bracket (31) causing consequential lateral movement of the forward end of the plough beam (14) which pivots about the pivot bracket (25) between the plough beam (14) and the rear frame connection (23).

3. A plough according to Claim 1 or 2, in which the rear frame connection (23) comprises an arm which is pivotally connected to a wheel cradle structure (22) which supports the wheel (21) for movement about a pivot axis (37) during plough body reversal.

4. A plough according to Claim 3, in which the wheel cradle structure (22) is connected to a rear end of the towing beam (13) via a universal joint coupling (40, 41).

5. A plough according to any one of Claims 1 to 4, in which the spacing from the forward pivot coupling (19) of the pivots (27) of successive brackets (16) along the length of the plough beam (14) are successively increasing multiples of the spacing (d) from the forward pivot coupling (19) of the foremost pivot (27a) associated with the foremost pair of plough bodies (15a).
